# EUROPEAN PATENT APPLICATION

(11) **EP 3 119 096 A1**
(43) Date of publication of application: **18.01.2017**
(21) Application number: 16152972.2
(22) Date of filing: 27.01.2016
(51) Int. Cl.: H04N 21/4223, H04N 5/76, H04N 21/433, H04N 21/44, H04N 21/442

(54) **IMAGE DISPLAY APPARATUS AND METHOD OF OPERATING THE SAME**

(30) Priority: 15.07.2015 KR 20150100518
(71) Applicant: Samsung Electronics Co., Ltd., Gyeonggi-do 16677 (KR)
(72) Inventor: KIM, Soo-jin, Seoul (KR); KIM, Hyun-ho, Seoul (KR); CHO, Jae-seung, Gyeonggi-do (KR); KIM, In-beom, Gyeonggi-do (KR); PARK, Yong-june, Gyeonggi-do (KR); YEO, Song-I, Seoul (KR); JEONG, Jae-hyun, Gyeonggi-do (KR)
(74) Representative: Hewett, Jonathan Michael Richard

(57) **Abstract**

An image display apparatus includes a camera configured to capture an image of a user's face, a display configured to display a video currently being reproduced in the image display apparatus, and a controller configured to detect a change in facial expression from the captured image of the user's face when entering a personal video recording (PVR) mode and when the change in facial expression is detected, to store the video to be reproduced from a first time point before a point in time at which the change in facial expression is detected to a second time point after the point in time at which the change in facial expression is detected.

## Description

The present invention relates to image display apparatuses and methods of operating the same, and for example, to image display apparatuses and methods of operating the same capable of storing a video to be reproduced in an image display apparatus.

Image display apparatuses have a function of displaying an image capable of being viewed by a user. A user may view a broadcast through an image display apparatus. An image display apparatus displays a broadcast selected by a user on a display from among broadcast signals transmitted by broadcasting stations. There is currently a trend of converting broadcasting from analog broadcasting to digital broadcasting all over the world.

Digital broadcasting is broadcasting in which digital video and audio signals are transmitted. Compared with analog broadcasting, digital broadcasting is robust to external noise and therefore has little data loss, an advantage in error correction, and high resolution, and provides a clear screen. In addition, digital broadcasting is different from analog broadcasting in that bi-directional services are possible in digital broadcasting.

In addition, smart TVs have recently been provided to provide various types of content in addition to a digital broadcasting function. Smart TVs are not manually operated according to a user's selection, but are aimed at analyzing user-desired operations to provide an analysis result without a user performing any operation.

Image display apparatuses and methods of operating the same are provided, and are capable of storing a video to be reproduced based on a point in time at which a change in a facial expression of a user is detected.

Additional aspects will be set forth in part in the description which follows and, in part, will be apparent from the description.

According to an example embodiment of the present invention, an image display apparatus includes a camera configured to capture an image of a user's face; a display configured to display a video currently being reproduced in the image display apparatus; and a controller configured to detect a change in facial expression from the captured image of the user's face when entering a personal video recording (PVR) mode and, when a change in facial expression is detected, to store in a storage unit the video to be reproduced from a first time point to a second time point, said first time point being a time point before a point in time at which the change in facial expression is detected, said second time point being a time point after the point in time at which the change in facial expression is detected.

According to an example embodiment, the image display apparatus may further include detection circuitry configured to detect an input for selecting the PVR mode, wherein the controller is configured to enter the PVR mode when the input for selecting the PVR mode is detected.

According to an example embodiment, the detection circuitry may be configured to detect an input for setting a time period from the first time point to the second time point.

According to an example embodiment, the storage unit may sequentially temporally store a predetermined number of frames to be reproduced from an entry time point of the PVR mode at the time of entering the PVR mode.

According to an example embodiment, the controller may be configured to detect the change in facial expression by comparing a pre-stored first face image with a second face image captured by the camera.

According to an example embodiment, the controller may be configured to detect the change in facial expression by comparing a first face image acquired by capturing the image of the face when entering the PVR mode with a second face image acquired by periodically capturing the image of the face after entering the PVR mode.

According to an example embodiment, the controller may be configured to store audio corresponding to the stored video in the storage unit.

According to an example embodiment, the controller may be configured to store some frames among frames included in the video to be reproduced from the first time point to the second time point in the storage unit.

According to an example embodiment, the display may be configured to display an icon indicating the stored video.

According to an example embodiment, the icon may include at least one of the image of the user's face captured at the point in time at which the change in facial expression of the user is detected and a thumbnail image indicating the stored video.

According to an example embodiment, the image display apparatus may further include detection circuitry configured to detect an input for selecting the icon, wherein the controller is configured to reproduce a video corresponding to the icon when the input for selecting the icon is detected.

According to an example embodiment, a method of operating an image display apparatus includes displaying a video currently being reproduced in the image display apparatus; entering a PVR mode; capturing an image of a user's face; detecting a change in facial expression from the captured image of the user's face; and when a change in facial expression is detected, storing the video to be reproduced from a first time point to a second time point, the first time point being a time point before a point in time at which the change in facial expression is detected and the second time point being a time point after the point in time at which the change in facial expression is detected.

According to an example embodiment, the entering may include detecting an input for selecting the PVR mode; and entering the PVR mode when the input for selecting the PVR mode is detected.

According to an example embodiment, the entering may further include detecting the input for setting a time period from the first time point to the second time point.

According to an example embodiment, the method of operating the image display apparatus may further include sequentially temporally storing a predetermined number of frames to be reproduced from an entry time point of the PVR mode at the time of entering the PVR mode.

According to an example embodiment, the detecting may include detecting the change in facial expression by comparing a pre-stored first face image with a second face image captured by a camera.

According to an example embodiment, the detecting may include detecting the change in facial expression by comparing a first face image acquired by capturing the image of the face when entering the PVR mode with a second face image acquired by periodically capturing the image of the face after entering the PVR mode.

According to an example embodiment, the method of operating the image display apparatus may further include storing audio corresponding to the stored video in a storage unit.

According to an example embodiment, the storing may include storing some frames among frames included in the video to be reproduced from the first time point to the second time point in a storage unit.

According to an example embodiment, the method of operating the image display apparatus may further include displaying an icon indicating the stored video.

According to an example embodiment, the method of operating the image display apparatus may further include detecting an input for selecting the icon; and reproducing the video corresponding to the icon when the input for selecting the icon is detected.

According to example embodiments, it is possible to store a video that a user has actually enjoyed instead of a video that has merely been viewed, because a video to be reproduced based on a point in time at which a change in facial expression of the user is detected is stored as a personal video.

A video to be reproduced based on a point in time at which a change in facial expression of a user is detected may be shared with another user, for example, so that the video is available as conversational material with the other user.

These and/or other aspects will become apparent and more readily appreciated from the following detailed description, taken in conjunction with the accompanying drawings, in which like reference numerals refer to like elements, and wherein:
FIG. 1 is a diagram illustrating an example image display apparatus and an example control device;
FIG. 2 is a block diagram illustrating an example configuration of an example image display apparatus;
FIG. 3 is a block diagram illustrating an example configuration of an example image display apparatus;
FIG. 4 is a diagram illustrating an example configuration of software stored in a storage unit 190 of FIG. 3;
FIG. 5 is a block diagram illustrating an example configuration of the control device;
FIG. 6 is a diagram illustrating an example menu for entering a PVR mode displayed on the display;
FIG. 7 is a diagram illustrating an example method in which the image display apparatus operates in the PVR mode;
FIG. 8 is a diagram illustrating an example method in which the image display apparatus operates in the PVR mode;
FIG. 9 is a diagram illustrating an example method in which the image display apparatus detects a change in facial expression;
FIG. 10 is a diagram illustrating an example method in which the image display apparatus records a video when the change in facial expression is detected;
FIGS. 11 and 12 are diagrams illustrating examples in which notice messages are displayed in the PVR mode;
FIG. 13 is a diagram illustrating an example in which a personal video list is displayed;
FIG. 14 is a diagram illustrating an example in which the image display apparatus shares a personal video through a server; and
FIG. 15 is a flowchart illustrating an example method of operating the image display apparatus.

Reference will now be made in greater detail to example embodiments, examples of which are illustrated in the accompanying drawings, wherein like reference numerals refer to like elements throughout. The example embodiments may have different forms and are not to be construed as being limited to the descriptions set forth herein. Accordingly, the example embodiments are merely described below, by referring to the figures, to explain aspects. As used herein, the term "and/or" includes any and all combinations of one or more of the associated listed items. Expressions such as "at least one of," when preceding a list of elements, modify the entire list of elements and do not modify the individual elements of the list.

Terms used in the disclosure will be briefly described, and the present invention will be described in greater detail with reference to various examples.

Although general terms widely used at present were selected in view of the functions in the example embodiments, these general terms may vary according to intentions of one of ordinary skill in the art, case precedents, the advent of new technologies, and the like. Terms arbitrarily selected by the applicant may also be used in specific cases. For example, their meanings may be given in the detailed description. Hence, the terms may be defined based on their meanings and the contents of the entire disclosure, not by simply stating the terms.

It will be understood that the terms "comprises" and/or "comprising" or "includes" and/or "including" when used in this disclosure, specify the presence of stated elements, but do not preclude the presence or addition of one or more other elements. Terms such as "unit" and "module" stated in the specification refer to units that process at least one function or operation, and they may be implemented by using hardware (e.g., circuitry), software, or a combination of hardware and software.

Example embodiments of the present invention will be described in detail with reference to the accompanying drawings. However, the present invention may be implemented in various different forms and is not limited to the examples set forth herein. In order to clearly describe the invention, the descriptions of functions and elements which are not directly related to the disclosure will be omitted. Like reference numerals denote like elements throughout the accompanying drawings.

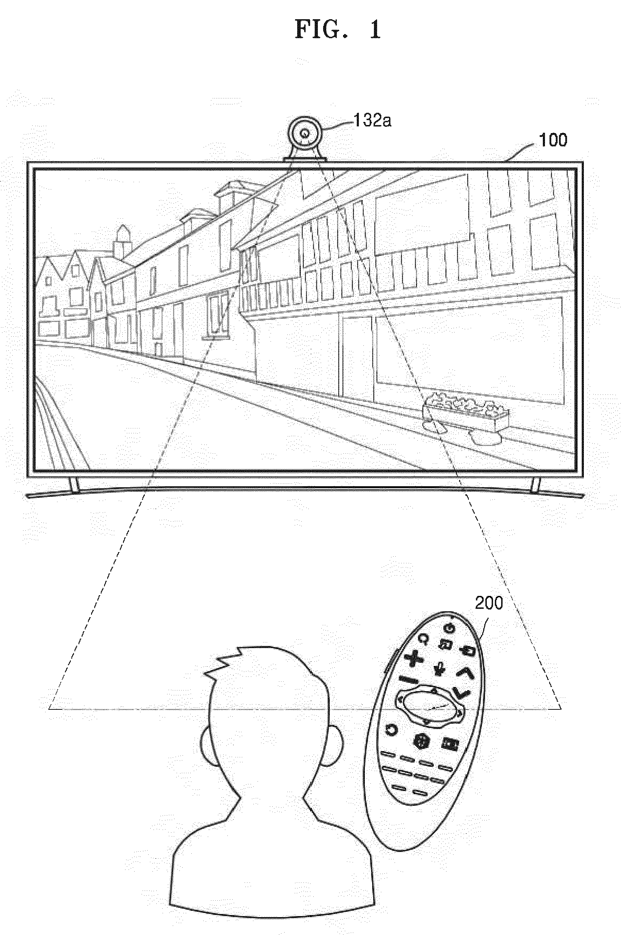

FIG. 1 is a diagram illustrating an example image display apparatus and an example control device.

As illustrated in FIG. 1, the image display apparatus 100 may be a TV, but this is only an example, and the image display apparatus 100 may be implemented as an electronic apparatus including a display unit (e.g., a display). For example, the image display apparatus 100 may be implemented by various electronic apparatuses such as a mobile phone, a tablet PC, a digital camera, a camcorder, a laptop computer, a desktop computer, an e-book terminal, a digital broadcasting terminal, a personal digital assistant (PDA), a portable multimedia player (PMP), a navigation apparatus, an MPEG-1 Audio Layer-3 (MP3) player, and a wearable device, etc. For example, example embodiments may be easily implemented in a display apparatus having a large-size display, but are not limited thereto. In addition, the image display apparatus 100 may be a fixed type or a mobile type, and may be a digital broadcasting receiver capable of receiving a digital broadcast, or the like.

The image display apparatus 100 may, for example, be implemented as a curved display apparatus which is a screen having curvature or a flexible display apparatus in which the curvature is adjustable as well as a flat display apparatus. The output resolution of the image display apparatus 100, for example, may include high definition (HD), full HD, ultra HD or clearer definition than ultra HD.

The image display apparatus 100 may, for example, include a camera 132a. The camera 132a may process an image frame such as a still image or a moving image acquired by an image sensor. When there is a request or periodically, the camera 132a may acquire an image of the user's face by capturing the image of the user's face. According to an example embodiment, the image display apparatus 100 may control the camera 132a to capture the image of the user's face when a command for entering a PVR mode is received.

The camera 132a may, for example, be located in the top of the image display apparatus 100 so that the user's face may be captured, but is not limited thereto. An installation position of the camera 132a may be variously changed by a designer or user of the image display apparatus.

In example embodiments of the present invention, the term "user" may, for example, refer to a person who controls a function or operation of the image display apparatus 100 using the control device 200, and may include a viewer, a manager, or an installation engineer, or the like.

The control device 200 may, for example, be implemented as various types of apparatuses for controlling the image display apparatus 100 such as a remote control device and a mobile phone, or the like.

The control device 200 may be configured to control the image display apparatus 100 using short-range communication including, for example, infrared or Bluetooth communication. The control device 200 may, for example, control the function of the image display apparatus 100 using at least one of provided keys (including buttons), a touchpad, a microphone (not illustrated) capable of receiving the user's voice, and a sensor (not illustrated) capable of recognizing motion of the control device 200.

The control device 200 includes a power supply ON/OFF button for turning the power supply of the image display apparatus 100 on or off. The control device 200 may also be configured to perform a channel change, volume adjustment, terrestrial broadcasting/cable broadcasting/satellite broadcasting selection, or environmental setting according to the user's input.

According to an example embodiment, the image display apparatus 100 may detect the user's input for selecting the PVR mode and the user's input for setting a PVR time using the control device 200.

In addition, the control device 200 may, for example, be a pointing apparatus. For example, the control device 200 may operate as the pointing apparatus when a specific key input is received.

The image display apparatus 100 may be controlled by the user's input of horizontally or vertically moving the control device 200 or tilting the control device 200 in any direction. Information about the motion of the control device 200 detected through a sensor of the control device 200 may be transmitted to the image display apparatus 100. The image display apparatus 100 may determine coordinates of a cursor on the display from information about the motion of the control device 200 and may move the cursor in correspondence with the determined coordinates. Thus, the cursor on the display of the image display apparatus 100 may move and various menus displayed on the display may be activated.

When the control device 200 includes a touchpad, the cursor on the display of the image display apparatus 100 may move or various menus displayed on the display may be selectively activated based, for example, on a displacement value of an object such as the user's finger which moves on the touchpad.

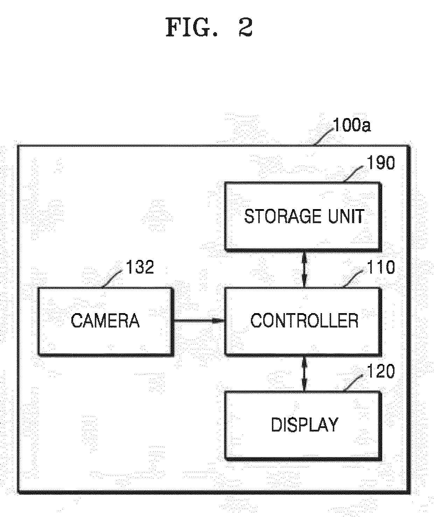

FIG. 2 is a block diagram illustrating an example configuration of an example image display apparatus. The image display apparatus 100a may be one example of the image display apparatus 100 of FIG. 1.

Referring to FIG. 2, the image display apparatus 100a according to the example embodiment may include a camera unit (e.g., a camera) 132, a control unit (e.g., a controller) 110, a display unit (e.g., a display) 120, and a storage unit (e.g., a memory) 190.

The camera unit 132 may include, for example, a lens (not illustrated) and an image sensor (not illustrated) and the camera unit 132 may include the camera 132a illustrated in FIG. 1. The camera unit 132 may, for example, support an optical zoom or digital zoom using a plurality of lenses and image processing. A recognition range of the camera unit 132 may be variously set based on an angle of the camera and an environmental condition. When the camera unit 132 comprises of a plurality of cameras, it is possible to receive a three-dimensional (3D) still image or 3D motion using the plurality of cameras.

The camera unit 132 according to an example embodiment may capture the image of the user's face when the image display apparatus 100a enters the PVR mode. The camera unit 132 may output the captured image of the user's face to the control unit (e.g., controller) 110.

In addition, the camera unit 132 receives an image (for example, a continuous frame) corresponding to the user's motion including a gesture in a recognition range of the camera. For example, the recognition range of the camera unit 132 may be a distance from the camera unit 132 to the user within about 0.1 to 5 m. The user's motion, for example, may include the motion of a part of the user's body such as the user's face, facial expression, hand, fist, and finger. The camera unit 132 converts a received image into an electric signal under the control of the control unit (e.g., controller) 110 to output the electric signal to the control unit 110.

The control unit 110 may be configured to select a menu displayed on the image display apparatus 100a or to perform control corresponding to a motion recognition result using the received motion recognition result. For example, the control may include channel adjustment, volume adjustment, indicator movement, and cursor movement, or the like.

The camera unit 132 may, for example, be integrated with or separated from the image display apparatus 100a. A separate apparatus (not illustrated) including the separated camera unit 132 may be electrically connected to the image display apparatus 100a through communication circuitry or an input/output unit.

The display unit 120 generates a driving signal by converting an image signal, a data signal, an on screen display (OSD) signal, a control signal, or the like processed in the control unit 110. The display unit 120 may be implemented as a plasma display panel (PDP), a liquid crystal display (LCD), an organic light-emitting diode (OLED), or a flexible display, or may be implemented as a 3D display. In addition, the display unit 120 may be configured as a touch screen, and may be used as an input unit other than an output unit.

The display unit 120 according to an example embodiment may display a video currently being reproduced in the image display apparatus 100a. The display unit 120 may display various notice messages while the PVR mode operates. The display unit 120 may display an icon indicating the stored video, and the icon may, for example, include at least one of the image of the user's face captured at the point in time at which the change in facial expression is detected and a thumbnail image indicating the stored video.

The control unit 110 may be configured to process an image signal and input the processed image signal to the display unit 120. An image corresponding to the image signal may be displayed on the display unit 120. In addition, the control unit 110 may be configured to control the image display apparatus 100a based on a received user command or an internal program.

The control unit 110 according to an example embodiment may be configured to detect a change in facial expression from the received image of the user's face received from the camera unit 132. The control unit 110 may be configured to detect the change in facial expression by comparing a pre-stored first face image of the user with a second face image of the user captured by the camera unit 132. The control unit 110 may be configured to detect the change in facial expression by comparing the captured first face image of the user when entering the PVR mode with the second face image of the user periodically captured after entering the PVR mode. However, example embodiments are not limited thereto.

When a change in facial expression is detected, control unit 110 may be configured to store, in the storage unit 190, the video to be reproduced from a first time point before a point in time at which the change in facial expression is detected to a second time point after the point in time at which the change in facial expression is detected.

The storage unit 190 may store various data, programs, or applications for driving and controlling the image display apparatus 100a under the control of the control unit 110.

The storage unit 190 may store control programs for the image display apparatus 100a and to control the control unit, an application that is initially provided by a manufacturer or externally downloaded, a graphical user interface (GUI) related to the application, an object (for example, an image, text, an icon, a button, or the like) for providing the GUI, user information, documents, databases (DBs), or related data.

The storage unit 190 according to an example embodiment may sequentially temporally store a predetermined number of frames to be reproduced from an entry time point of the PVR mode at the time of entering the PVR mode. A video frame reproduced before a point in time at which the change in facial expression is detected may also be stored as a personal video.

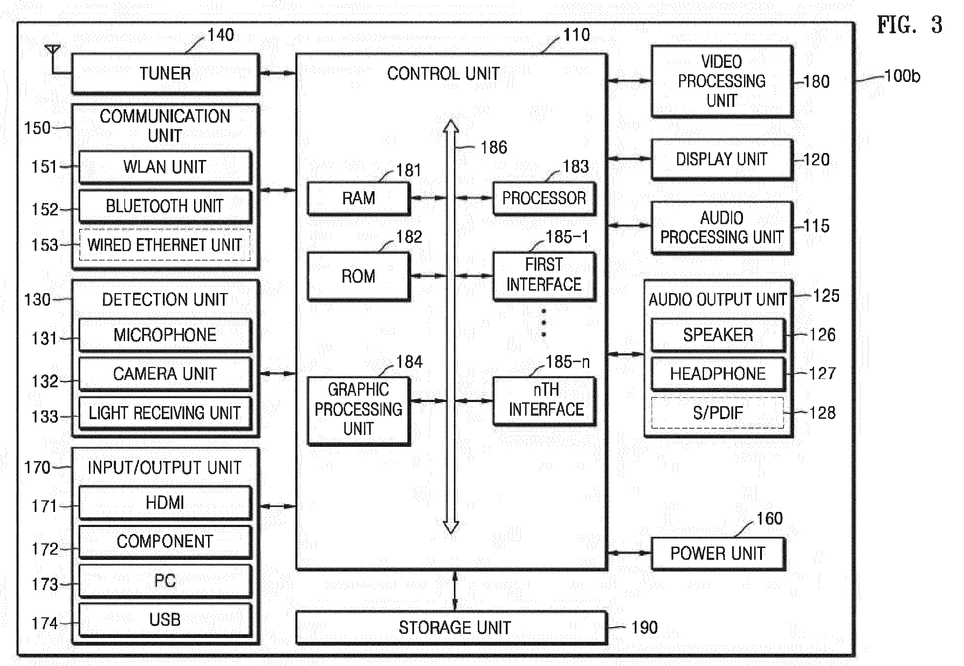

FIG. 3 is a block diagram illustrating an example configuration of an example image display apparatus. The image display apparatus 100b of FIG. 3 may be an example of the image display apparatus 100 of FIG. 1.

Referring to FIG. 3, the image display apparatus 100b according to an example embodiment may further include a video processing unit (e.g., video processor) 180, an audio processing unit (e.g., audio processor) 115, an audio output unit 125, a power unit 160, a tuner 140, a communication unit (e.g., communication circuitry) 150, a detection unit 130, and an input/output unit 170 in addition to the camera unit (e.g., camera) 132, the control unit (e.g., controller) 110, the display unit (e.g., display) 120, and the storage unit (e.g., memory) 190.

Because the camera unit 132, the control unit 110, the display unit 120, and the storage unit 190 are similar to those described with reference to FIG. 2, the same content thereof will be omitted from the description of FIG. 3.

The video processing unit (e.g., video processor) 180 performs processing for video data received by the image display apparatus 100b. The video processing unit 180 may perform various types of image processing such as decoding, scaling, noise filtering, frame rate conversion, and resolution conversion on video data.

The display unit (e.g., display) 120 displays a video included in a broadcast signal received through the tuner 140 on the screen under the control of the control unit 110. In addition, the display unit 120 may display content (for example, a video) input through the communication unit 150 or the input/output unit 170. The display unit 120 may output an image stored in the storage unit 190 under the control of the control unit 110. In addition, the display unit 120 may display a voice user interface (UI) (for example, including a voice command guide) for performing a voice recognition task corresponding to voice recognition or a motion UI (for example, including a user motion guide for motion recognition) for performing a motion recognition task corresponding to the motion recognition.

The audio processing unit (e.g., audio processor) 115 processes audio data. The audio processing unit 115 may perform various processes such as decoding, amplification, and noise filtering on the audio data. The audio processing unit 115 may include a plurality of audio processing modules for processing the audio data corresponding to a plurality of pieces of content.

The audio output unit 125 outputs an audio signal included in a broadcast signal received through the tuner 140 under the control of the control unit 110. The audio output unit 125 may output the audio signal (for example, a voice and a sound) input through the communication unit 150 or the input/output unit 170. The audio output unit 125 may output the audio signal stored in the storage unit 190 under the control of the control unit 110. The audio output unit 125 may, for example, include at least one of a speaker 126, a headphone output port 127, and a Sony/Philips digital interface (S/PDIF) output port 128. The audio output unit 125 may include a combination of the speaker 126, the headphone output port 127, and the S/PDIF output port 128.

The power unit 160 supplies electric power input from an external power source to internal components of the image display apparatus 100b under the control of the control unit 110. In addition, the power unit 160 may supply electric power output from one or more batteries (not illustrated) located inside the image display apparatus 100b to the internal components under the control of the control unit 110.

The tuner 140 may receive a broadcast signal received wirelessly or by wire according to amplification, mixing, resonance, and the like and tune and select only a frequency of a channel desired to be received by the image display apparatus 100b among many radio wave components of the broadcast signal. The broadcast signal includes audio, a video, and additional information (for example, an electronic program guide (EPG)).

The tuner 140 may receive a broadcast signal in a frequency band corresponding to a channel number (for example, cable broadcast channel No. 506) based on the user's input (for example, a control signal received from the control device 200, for example, a channel number input, a channel up-down input, and a channel input in an EPG screen).

The tuner 140 may receive broadcast signals from various sources such as terrestrial broadcasting, cable broadcasting, satellite broadcasting, and Internet broadcasting, or the like. The tuner 140 may also receive a broadcast signal from a source such as digital broadcasting or analog broadcasting. The broadcast signal received through the tuner 140 may be subjected to decoding (for example, audio decoding, video decoding, or additional information decoding) and separated into audio, a video, and/or additional information. The audio, the video, and/or the additional information after the separation may be stored in the storage unit 190 under the control of the control unit 110.

The number of tuners 140 of the image display apparatus 100b may be one or more. The tuner 140 may be implemented in an all-in-one form with the image display apparatus 100b or by a separate apparatus having a tuner electrically connected to the image display apparatus 100b (for example, a set-top box (not illustrated)) or a tuner (not illustrated) connected to the input/output unit 170).

The communication unit 150 may connect the image display apparatus 100b to the external apparatus (for example, an audio apparatus) under the control of the control unit 110. The control unit may be configured to transmit/receive content to/from the external apparatus, to download an application from the external apparatus, or to perform web browsing through the communication unit 150. The communication unit 150 may, for example, include one of a wireless local area network (WLAN) unit 151, a Bluetooth unit 152, and a wired Ethernet unit 153 in correspondence with the performance and structure of the image display apparatus 100b. The communication unit 150 may include a combination of the WLAN unit 151, the Bluetooth unit 152, and the Ethernet unit 153. The communication unit 150 may receive a control signal of the control device 200 under the control of the control unit 110. The control signal may be implemented in a Bluetooth type, a radio frequency (RF) signal type, or a wireless fidelity (Wi-Fi) type.

For example, the communication unit 150 may be configured to receive a signal corresponding to the user's input of a Bluetooth type (for example, a touch, a press, a touch gesture, voice, or motion) from the control device 200 through the communication of the Bluetooth unit 152. The communication unit 150 may further include short-range communication other than Bluetooth (for example, near field communication (NFC) (not illustrated) or Bluetooth low energy (BLE) (not illustrated)).

The detection unit 130 detects the user's voice, the user's image, or the user's interaction, and may include a microphone 131, a camera unit 132, and a light receiving unit 133. Because the camera unit 132 has the same configuration as that of FIG. 2, detailed description thereof will be omitted.

The microphone 131 receives a sound uttered by the user. The microphone 131 may convert the received utterance into an electrical signal and output the electrical signal to the control unit 110. The user's utterance, for example, may include an utterance corresponding to a menu or function of the image display apparatus 100b. It is recommended that a recognition range of the microphone 131 be, for example, within about 4 m from the microphone 131 to the user's position. The recognition range of the microphone 131 may differ in correspondence with a level of the user's voice and a surrounding environment (for example, a sound from a speaker or ambient noise).

According to an example embodiment, the microphone 131 may receive the sound uttered by the user and output data of the received sound or the like to the control unit 110 so that the control unit 110 may use the sound data to identify the identity of the user who views the image display apparatus 100b.

The microphone 131 may, for example, be implemented to be integrated with or separated from the image display apparatus 100b. The separated microphone 131 may be electrically connected to the image display apparatus 100b through the communication unit 150 or the input/output unit 170.

Those skilled in the art will readily understand that the microphone 131 may be omitted based on the performance and structure of the image display apparatus 100b.

The light receiving unit 133 receives a light signal (including a control signal) received from the external control device 200 through a light window (not illustrated) located in the bezel of the display unit 120. The light receiving unit 133 may receive a light signal corresponding to the user's input (for example, a touch, a press, a touch gesture, voice, or motion) from the control device 200. Under the control of the control unit 110, the control signal may be extracted from the received light signal.

The input/output unit 170 receives a video (for example, a moving image or the like), audio (for example, a voice, music, or the like), additional information (for example, an EPG or the like), and the like from the outside of the image display apparatus 100b under the control of the control unit 110. The input/output unit 170 may include one of a high-definition multimedia interface (HDMI) port 171, a component jack 172, a PC port 173, and a Universal Serial Bus (USB) port 174. The input/output unit 170 may include a combination of the HDMI port 171, the component jack 172, the PC port 173, and the USB port 174.

Those skilled in the art will readily understand that a configuration and operation of the input/output unit 170 may be implemented in various ways.

The control unit 110 is configured to control the overall operation of the image display apparatus 100b and a signal flow between internal components of the image display apparatus 100b and to perform a function of processing data. When there is an input of the user or a preset stored condition is satisfied, the control unit 110 may be configured to execute the OS and various applications stored in the storage unit 190.

The control unit 110 may, for example, include a random access memory (RAM) 181 storing a signal or data input from outside the image display apparatus 100b and used as a storage region corresponding to various operations to be performed in the image display apparatus 100b, a read only memory (ROM) 182 storing a control program for controlling the image display apparatus 100b, and a processor 183.

The processor 183 may include a graphic processing unit (GPU) (not illustrated) for graphic processing corresponding to a video. The processor 183 may be implemented as a system on chip (SoC) in which a core (not illustrated) and the GPU (not illustrated) are integrated. The processor 183 may include a single core, a dual core, a triple core, a quad core, etc.

The processor 183 may include a plurality of processors. For example, the processor 183 may be implemented as a main processor (not illustrated) and a sub processor (not illustrated) operable in a sleep mode.

The graphic processing unit 184 generates a screen including various objects such as an icon, an image, and text using a calculation unit (not illustrated) and a rendering unit (not illustrated). The calculation unit calculates attribute values such as coordinate values, forms, sizes, and colors in which objects are displayed according to a layout of the screen using the user's input detected through the detection unit 130. The rendering unit generates screens of various layouts including objects based on the attribute values calculated by the calculation unit. The screen generated by the rendering unit is displayed within a display region of the display unit 120.

The first to n^{th} interfaces 185-1 to 185-n are connected to the above-described various components. One of the interfaces may be a network interface connected to an external apparatus through the network.

The RAM 181, the ROM 182, the processor 183, the graphic processing unit 184, and the first to n^{th} interfaces 185-1 to 185-n may be mutually connected through an internal bus 186.

In this example embodiment, the term "control unit of the image display apparatus" includes the processor 183, the ROM 182, and the RAM 181 and may be referred to as a controller.

The storage unit 190 may store input/output signals or data corresponding to driving of the video processing unit 180, the display unit 120, the audio processing unit 115, the audio output unit 125, the power unit 160, the tuner 140, the communication unit 150, the detection unit 130, and the input/output unit 170.

In an example embodiment, the term "storage unit" may refer to the storage unit 190, the ROM 182 or the RAM 181 of the control unit, or a memory card (for example, a micro Secure Digital (SD) card or a USB memory (not illustrated)) mounted in the image display apparatus 100b. The storage unit 190 may include a nonvolatile memory, a volatile memory, a hard disk drive (HDD), or a solid state drive (SSD).

Although not illustrated, the storage unit 190 may include a broadcast receiving module, a channel control module, a volume control module, a communication control module, a voice recognition module, a motion recognition module, a light receiving module, a display control module, an audio control module, an external input control module, a power control module, a power control module of an external apparatus connected wirelessly (for example, Bluetooth), a voice DB, or a motion DB. The modules and the DBs (not illustrated) of the storage unit 190 may be implemented in the form of software for performing a broadcast reception control function, a channel control function, a volume control function, a communication control function, a voice recognition function, a motion recognition function, a light receiving control function, a display control function, an audio control function, an external input control function, a power control function, or a power control function of the external apparatus connected wirelessly (for example, via Bluetooth) in the image display apparatus 100b. The control unit 110 may perform each function using the software stored in the storage unit 190.

The image display apparatus 100b having the display unit 120 may be electrically connected to a separate external apparatus (for example, a set-top box (not illustrated). The image display apparatus 100b, for example, may be implemented by an analog TV, a digital TV, a 3D TV, a smart TV, a light-emitting diode (LED) TV, an OLED TV, a plasma TV, or a monitor, but those skilled in the art will readily understand that the image display apparatus 100b is not limited thereto.

The image display apparatus 100b may include a sensor (for example, an illumination sensor, a temperature sensor, or the like) (not illustrated) for detecting an internal or external state of the image display apparatus 100b.

The block diagrams of the image display apparatuses 100a and 110b illustrated in FIGS. 2 and 3 are merely examples. Components of each block diagram may be integrated, added, or omitted based on the specifications of the image display apparatus 100 to be actually implemented. For example, if necessary, two or more components may be integrated as a single component or one component may be divided into two or more components. In addition, functions to be performed in the blocks are for describing example embodiments and their detailed operations and apparatuses do not limit the scope of the present invention.

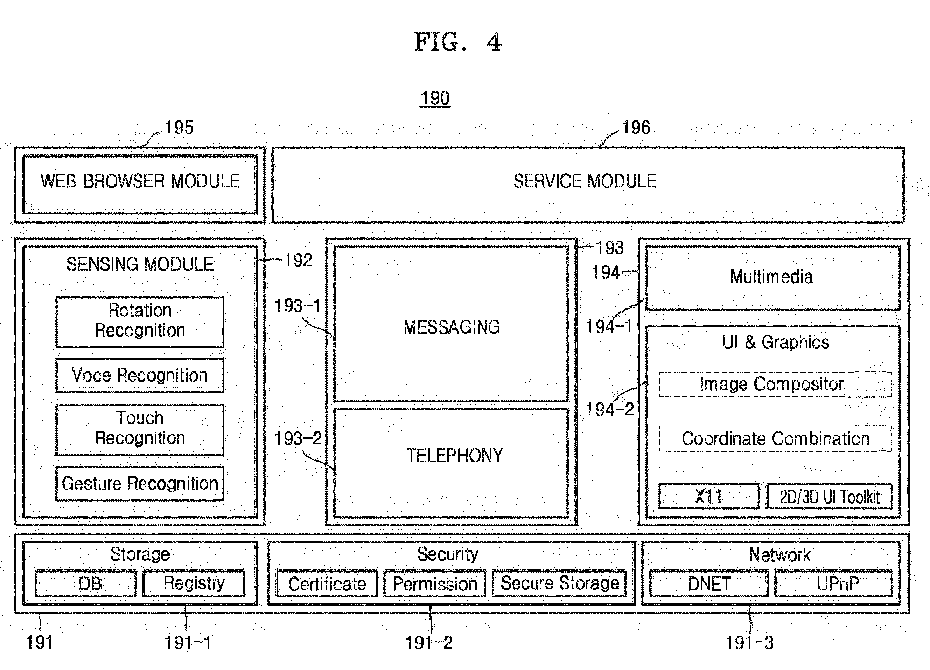

FIG. 4 is a diagram illustrating an example configuration of software stored in the storage unit 190 of FIG. 3.

Referring to FIG. 4, the storage unit 190 may store software including a base module 191, a sensing module 192, a communication module 193, a presentation module 194, a web browser module 195, and a service module 196.

The base module 191 processes a signal to be delivered from hardware included in the image display apparatus 100 and delivers the processed signal to a higher-order layer module. The base module 191 may include a storage module 191-1, a security module 191-2, a network module 191-3, etc. The storage module 191-1 may include a program module for managing the DB or registry. The processor 183 may access the DB within the storage unit 190 using the storage module 191-1 to read various types of data. The security module 191-2 may, for example, be a program module for supporting certification, permission, secure storage, etc. In addition, the network module 191-3 includes a domain network (DNET) module, a universal plug and play (UPnP) module, etc. as modules for supporting the network connection.

The sensing module 192 may, for example, be a module for collecting information from various types of sensors and analyzing and managing the collected information. The sensing module 192 may include a head direction recognition module, a face recognition module, a voice recognition module, a motion recognition module, an NFC recognition module, etc.

The communication module 193 may, for example, be a module for performing communication with the outside. The communication module 193 may include a messaging module 193-1 such as a messenger program, a short message service (SMS) & multimedia message service (MMS) program, or an e-mail program and a telephony module 193-2 including a call information aggregator program module, a voice over Internet protocol (VoIP) module, etc.

The presentation module 194 may, for example, be a module for configuring a display screen. The presentation module 194 may include a multimedia module 194-1 for reproducing multimedia content to output the reproduced multimedia content and a UI rendering module 194-2 for performing graphic processing. The multimedia module 194-1 may include a player module, a camcorder module, a sound processing module, etc. Accordingly, the multimedia module 194-1 performs an operation of reproducing various types of multimedia content to generate and reproduce a screen and a sound. The UI rendering module 194-2 may include an image compositor module for combining images, a coordinate combining module for combining coordinates on a screen on which an image is displayed and generating a coordinate combination, an X11 module for receiving various events from hardware, a two-dimensional (2D)/3D UI tool kit for providing a tool for configuring a 2D or 3D UI, etc.

The web browser module 195 may, for example, be a module for performing web browsing to access a web server. The web browser module 195 may include various modules such as a web view module constituting a web page, a download agent module for performing a download, a bookmark module, and a web-kit module.

The service module 196 may, for example, be a module including various applications for providing various services. For example, the service module 196 may include various program modules such as a social network service (SNS) program, a content reproduction program, a game program, an e-book program, a calendar program, an alarm management program, and a widget.

Various program modules are illustrated in FIG. 4, but, of course, some of various types of program modules illustrated in FIG. 4 may be omitted based on a type and characteristic of the image display apparatus 100 and the program modules may be modified or added. For example, the program modules may be implemented in a form which further includes a location base module for supporting a location base service in line with hardware such as a Global Positioning System (GPS) chip.

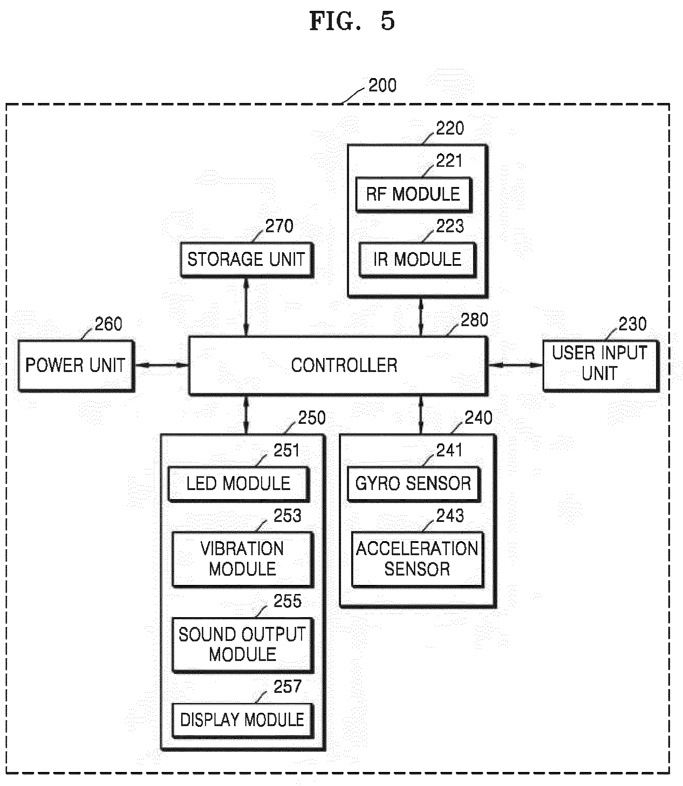

FIG. 5 is a block diagram illustrating an example configuration of the control device.

Referring to FIG. 5, the control device 200 may include a wireless communication unit 220, a user input unit 230, a sensor unit 240, an output unit 250, a power unit 260, a storage unit 270, and a control unit (e.g., a controller) 280.

The wireless communication unit (e.g., communication circuitry) 220 may be configured to transmit and receive a signal to and from any one of image display apparatuses according to the above-described example embodiments. The wireless communication unit 220 may include a radio frequency (RF) module 221 capable of transmitting and receiving the signal to and from the image display apparatus 100 according to an RF communication standard. The control device 200 may include an infrared (IR) module capable of transmitting and receiving a signal to and from the image display apparatus 100 according to an IR communication standard.

In an example embodiment, the control device 200 may transmit a signal containing information about motion of the control device 200 to the image display apparatus 100 through the RF module 221.

The control device 200 may receive a signal transmitted by the image display apparatus 100 through the RF module 221. In addition, the control device 200 may transmit a command related to power supply ON/OFF, a channel change, a volume change, or the like to the image display apparatus 100 through the IR module 223, if necessary.

The user input unit 230 may include a keypad, buttons, a touchpad, a touch screen, or the like. The user may input a command related to the image display apparatus 100 to the control device 200 by operating the user input unit 230. When the user input unit 230 includes a hard key button, the user may input a command related to the image display apparatus 100 to the control device 200 through an operation of pushing the hard key button. When the user input unit 230 includes the touch screen, the user may input a command related to the image display apparatus 100 to the control device 200 by touching a soft key of the touch screen.

For example, the user input unit 230 may include four direction buttons or keys. The four direction buttons or keys may be used to control a menu, an application, an item, or the like to be displayed on the display unit 120. The four direction keys or buttons may be used to indicate upward, downward, left, and right movements. In addition, those skilled in the art will understand that the user input unit 230 may include two direction keys or buttons instead of four direction keys or buttons.

The user input unit 230 may include various types of input means for enabling the user to operate a scroll key, a jog key, or the like.

The user input unit 230 may include a touchpad. The user input unit 230 according to an example embodiment may receive the user's input via gestures including, for example, drag, touch, or flip through the touchpad of the control device 200. The image display apparatus 100 may be controlled based on a type of received user input (for example, a direction in which a drag command is input and a time at which a touch command is input).

The sensor unit 204 may, for example, include a gyro sensor 241 or an acceleration sensor 243. The gyro sensor 241 may sense information about motion of the control device 200. For example, the gyro sensor 241 may sense information about an operation of the control device 200 based on x, y, and z axes. The acceleration sensor 243 may sense information about a movement speed or the like of the control device 200. A distance measurement sensor may be further provided to sense a distance from the image display apparatus 100.

The output unit 250 may output a video or audio signal corresponding to an operation of the user input unit 230 or corresponding to a signal received from the image display apparatus 100. Through the output unit 250, the user may recognize whether there is an operation of the user input unit 230 or whether there is control of the image display apparatus 100.

For example, the output unit 250 may include an LED module to be turned on when the user input unit 230 is operated or a signal is transmitted or received to or from the image display apparatus 100 through the wireless communication unit 220, a vibration module for generating vibration, a sound output module for outputting a sound, or a display module for outputting an image.

The power unit 260 supplies the control device 200 with power. The power unit 260 may reduce power consumption by stopping the supply of electric power when the control device 200 does not move for a predetermined time. The power unit 260 may resume the supply of electric power when a predetermined key provided in the control device 200 is operated.

The storage unit 270 may store various types of programs, application data, etc. necessary for the control or operation of the control device 200.

The control unit 280 is configured to control various operations related to the control of the control device 200. The control unit 280 may transmit a signal corresponding to a predetermined key operation of the user input unit 230 or a signal corresponding to motion of the control device 200 sensed by the sensor unit 240 to the image display apparatus 100 through the wireless communication unit 220.

The image display apparatus 100 may include a coordinate value calculation unit (not illustrated) capable of determining a coordinate value of a cursor corresponding to an operation of the control device 200.

The coordinate value calculation unit (not illustrated) may correct apparatus shake or an error from a signal corresponding to the detected operation of the control device 200 to calculate coordinate values (x, y) of the cursor to be displayed on the display unit 120.

In addition, a signal transmitted from the control device 200 detected through the detection unit 130 is transmitted to the control unit 110 of the image display apparatus 100. The control unit 110 may identify information about the operation and key operation of the control device 200 from the signal transmitted by the control device 200 and control the image display apparatus 100 in correspondence with the identified information.

For example, the control device 200 may calculate coordinate values of the cursor corresponding to the operation and transmit the calculated coordinate values to the image display apparatus 100. For example, the image display apparatus 100 may transmit information about the coordinate values of the cursor received without a separate apparatus shake or error correction process to the control unit 110.

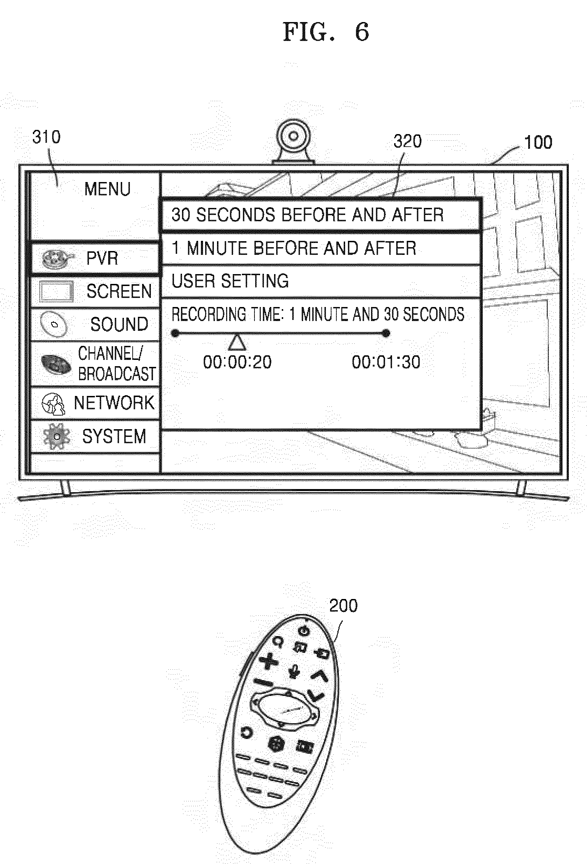

FIG. 6 is a diagram illustrating an example in which a menu for entering a PVR mode is displayed.

Referring to FIG. 6, the image display apparatus 100 may sense the user's input in which a menu key included in the control device 200 is pressed. The image display apparatus 100 may display a menu screen 310 on the display unit 120 corresponding to the detected input of the user. However, the user's input for displaying the menu screen 310 is not limited to a key press input.

The menu screen 310 may include menu items. The menu items may include a PVR item, a screen item, a sound item, a channel/broadcast item, a network item, a system item, etc. However, the menu items are not limited thereto.

The menu screen 310 is displayed and the image display apparatus 100 may detect the user's input for selecting any one item of the menu items included in the menu screen 310 using the control device 200.

As illustrated in FIG. 6, the display unit 120 may display a setting screen 320 related to PVR when the PVR item is selected. For example, it is possible to set a PVR time in the setting screen 320. The PVR time is a time in which a video to be reproduced is recorded (e.g., stored) as a personal video when a change in facial expression is detected from an image of the user's face.

For example, when a recording time is set to "30 seconds before and after," a video to be reproduced for 30 seconds before a first time point and 30 seconds after the first time point may be controlled to be stored based on the first time point at which a change in facial expression of the user is detected. In addition, when the recording time is set to "1 minute before and after," a video to be reproduced for 1 minute before the first time point and 1 minute after the first time point may be controlled to be stored based on the first time point at which the change in facial expression of the user is detected.

When "user setting" is set, a total recording time of the personal video and a position of a point in time at which the change in facial expression of the user is detected in the total recording time may be set. Accordingly, a recording time before the point in time at which the change in facial expression is detected and a recording time after the point in time at which the change in facial expression is detected may be directly set by the user. For example, when the recording time is set to 1 minute and 30 seconds and the point in time at which the change in facial expression is detected is set to a position corresponding to 00:00:20 in the total recording time of "1 minute and 30 seconds," the image display apparatus 100 may store a video to be reproduced for 20 seconds before the first time point at which the change in facial expression is detected and 1 minute and 10 seconds after the first time point.

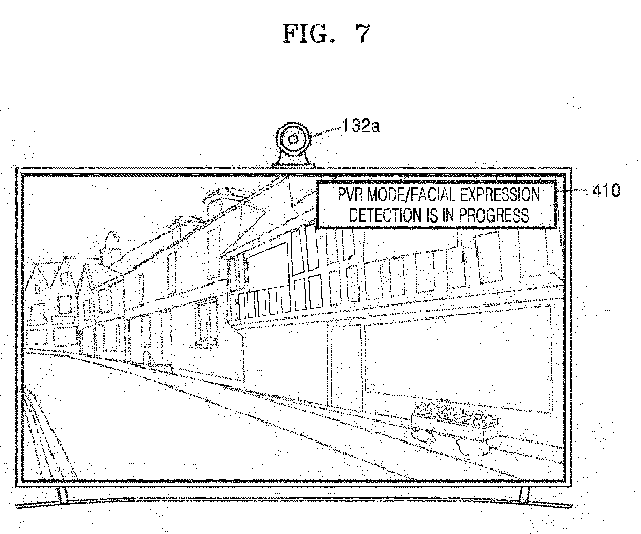

FIG. 7 is a diagram illustrating an example method in which the image display apparatus operates in the PVR mode.

Referring to FIG. 7, the image display apparatus 100 may operate the camera 132a to capture the user's face when entering the PVR mode.

In addition, the display unit 120 may display a message 410 indicating an operation in the PVR mode. At this time, the message 410 may be displayed in a preset region of the display unit 120 and may be displayed and disappear in a preset cycle instead of being continuously displayed. In addition, the image display apparatus 100 may be configured to display the message 410 so that the message 410 is not displayed based on the user's input.

According to an example embodiment, the display unit 120 displays the message 410 to notify the user that the image display apparatus 100 is operating in the PVR mode

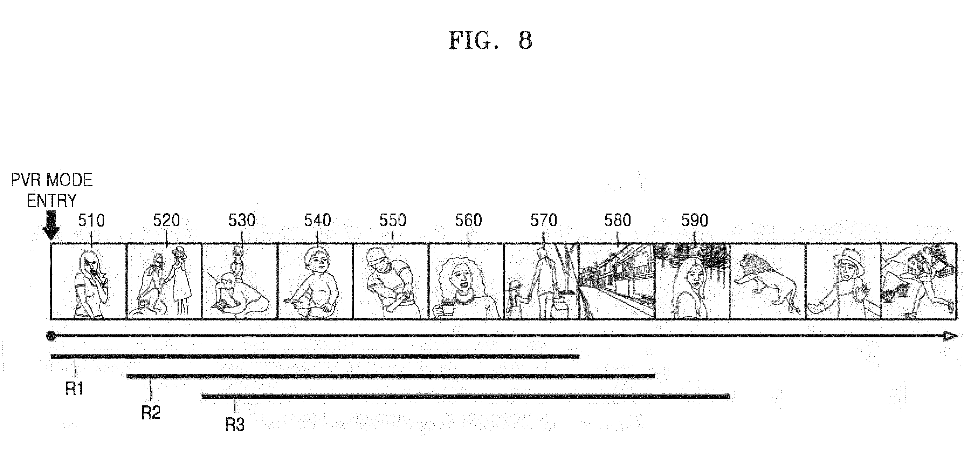

FIG. 8 is a diagram illustrating an example method in which the image display apparatus operates in the PVR mode.

Referring to FIG. 8, the image display apparatus 100 according to an example embodiment may temporarily store a video to be reproduced from the time of entering the PVR mode. For example, the image display apparatus 100 may sequentially temporarily store a predetermined number of video frames to be reproduced.

If the number of temporarily stored video frames is equal to the predetermined number of frames, the image display apparatus 100 may delete a first stored frame from among the stored video frames and store the next video frame when the next video frame subsequent to the most recently stored video frame is stored.

For example, when the storage unit 190 temporarily stores seven frames as illustrated in FIG. 8, the seven frames 510,520,530, 540,550,560, and 570 to be reproduced from the time of entering the PVR mode are sequentially stored (R1). When an eighth frame 580 which is the next frame subsequent to the seventh frame 570 is reproduced, it is possible to delete the first frame 510 and store the eighth frame 580 (R2). Similarly, when a ninth frame 590 is reproduced, it is possible to delete the second frame 520 and store the ninth frame 590 (R3).

At this time, the (preset) number of frames temporarily stored in the storage unit 190 is greater than or equal to the number of frames corresponding to the PVR time set in FIG. 6.

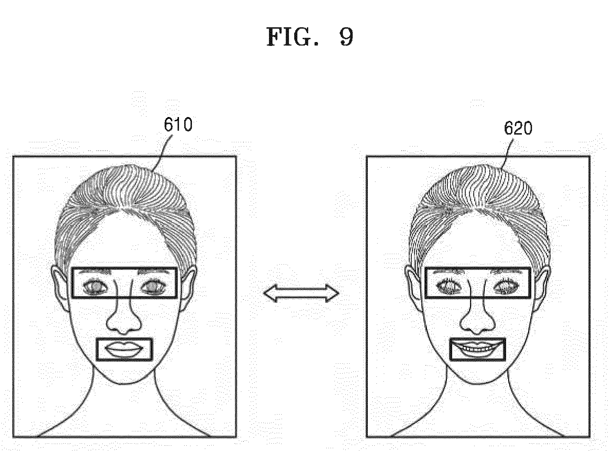

FIG. 9 is a diagram illustrating an example method in which the image display apparatus detects a change in facial expression in an image of a user's face.

Referring to FIG. 9, the image display apparatus 100 may detect the change in facial expression by comparing a first face image 610 of the user with a second face image 620.

For example, the change in facial expression may be detected by comparing an image (first face image 610) of the user's expressionless face with the user's face image (second face image 620) captured by the camera. At this time, the image of the user's expressionless face may be an image pre-stored by the user.

The image display apparatus 100 may detect the change in facial expression by comparing the user's face image (first face image 610) captured at the time of entering the PVR mode with the user's face image (second face image 620) periodically captured after entering the PVR mode.

The image display apparatus 100 may detect the change in facial expression based, for example, on specific elements from the face image of the user. For example, data about a distance between two eyes, an eye size (width), a mouth size (length), a face outline, etc. is acquired from the first face image 610 and the second face image 620, and the change in facial expression may be detected based on specific elements of whether the eyes are more open, whether the eyes are thinner, whether the corners of the eyes are more lowered, whether the mouth is more open, whether the corners of the mouth are more raised, etc. in the second face image than the first face image.

The image display apparatus 100 may determine a type of detected change in facial expression based on the specific elements. For example, when the change in facial expression may be determined to be a smile expression at the time of detecting the change in facial expression in which the eyes are thinner, the corners of the eyes are more lowered, and the corners of the mouth are more raised in the second face image 620 than the first face image 610. The type of change in facial expression may include a sad expression, a surprised expression, a scared expression, etc. in addition to the smile expression.

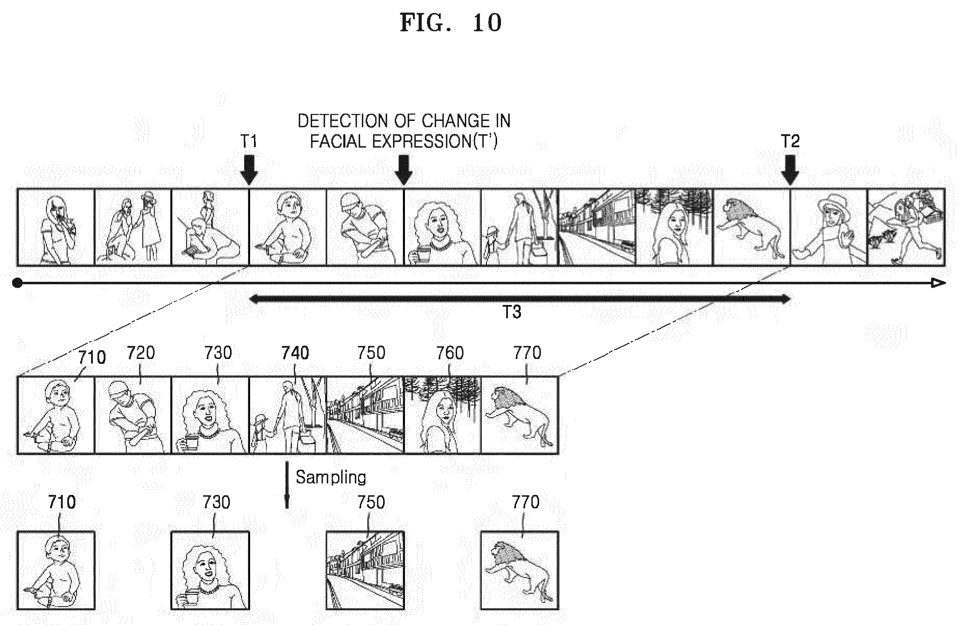

FIG. 10 is a diagram illustrating an example method in which the image display apparatus records a video when the change in facial expression is detected.

Referring to FIG. 10, the image display apparatus 100 may store a video to be reproduced based on a point in time at which the change in facial expression is detected from the user's face image. For example, the image display apparatus 100 may store a video to be reproduced in the storage unit from a first time point T1 before a point T' in time at which the change in facial expression is detected to a second time point T2 after the point in time at which the change in facial expression is detected.

A time period T3 from the first time point T1 to the second time point T2 may be preset by the user as described with reference to FIG. 6.

For example, when the user performs the setting so that a video to be reproduced for 20 seconds before a time T' at which the change in facial expression of the user is detected and 50 seconds after the time T' is recorded, the image display apparatus may store frames 710, 720, 730, 740, 750, 760, and 770 included in the video to be reproduced from a time point T1 which is 20 seconds earlier than the time point T' at which the change in facial expression is detected to a time point T2 which is 50 seconds later than the time point T' at which the change in facial expression is detected. As illustrated in FIG. 10 the image display apparatus 100 may, for example, store frames from the fourth frame 710 to the tenth frame 770.

As illustrated in FIG. 10, the image display apparatus 100 may sample and store some frames 710, 730, 750, and 770 among the frames 710, 720, 730, 740, 750, 760, and 770 included in the video to be reproduced from the time point which is 20 seconds earlier than the point in time at which the change in facial expression is detected to the time point T2 which is 50 seconds later than the point in time at which the change in facial expression is detected.

The image display apparatus 100 may store audio data corresponding to the stored video. On the other hand, even when the image display apparatus 100 samples and stores only some frames 710, 730, 750, and 770 among the frames 710, 720, 730, 740, 750, 760, and 770 included in the video, it is possible to store the audio data corresponding to the frames 710, 720, 730, 740, 750, 760, and 770 included in the video. However, example embodiments are not limited thereto.

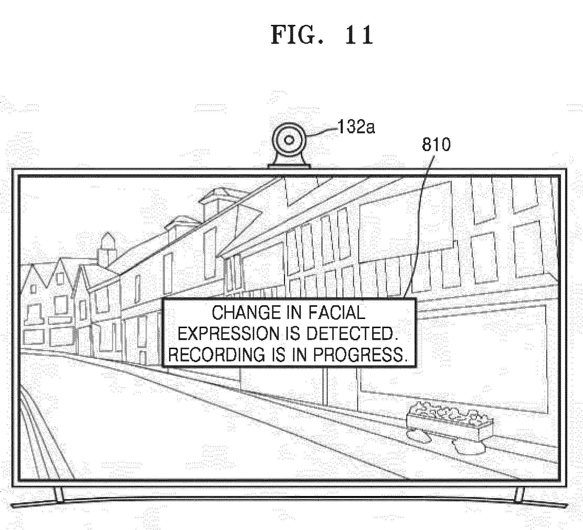

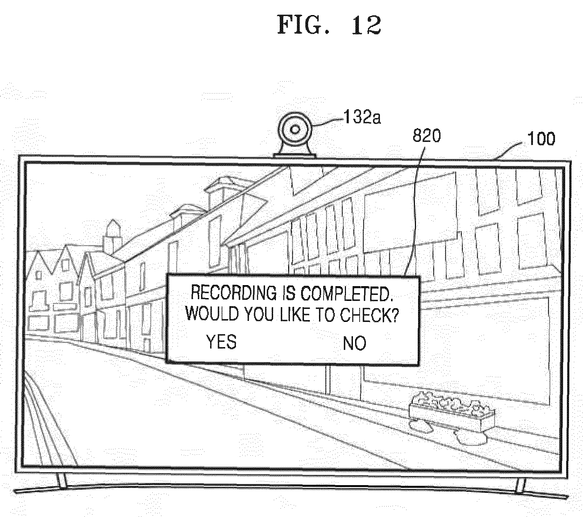

FIGS. 11 and 12 are diagrams illustrating examples in which notice messages are displayed in the PVR mode.

Referring to FIG. 11, the image display apparatus 100 may display a message 810 indicating that the change in facial expression is detected and recording is in progress on the display unit 120 when the change in facial expression of the user is detected while the operation is performed in the PVR mode.

At this time, the message 810 may be displayed in a preset region of the display unit 120 and displayed for a preset time, but it is not necessary to display the message 810 after the preset time. The image display apparatus 100 may be configured to display the message 810 so that the message 810 is not displayed based on the user's input.

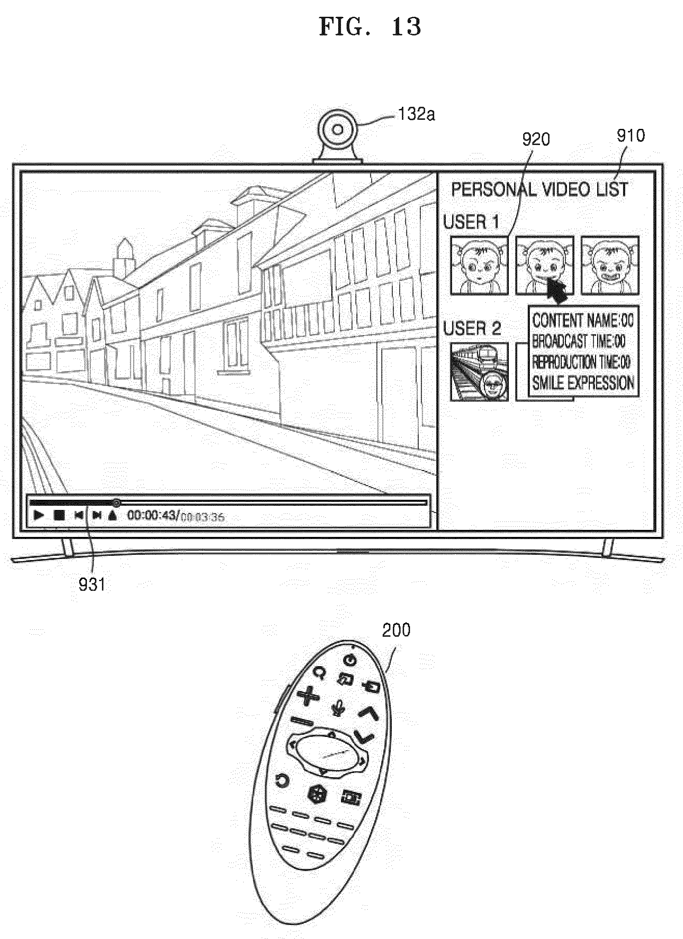

In addition, referring to FIG. 12, the image display apparatus 100 may display a message 820 for asking whether to check a recorded video along with the completion of PVR when the PVR is completed. At this time, when the user's input for selecting "YES" is detected, the image display apparatus 100 may display a recorded personal video list and reproduce a recorded personal video. The personal video list will be described below in greater detail with reference to FIG. 13.

FIG. 13 is a diagram illustrating an example in which a personal video list is displayed.

Referring to FIG. 13, the personal video list may be displayed based on the user's input. For example, when the user's input for selecting "YES" is detected in a state in which the message 820 of FIG. 12 is displayed, the image display apparatus 100 may display a personal video list 910. When a specific key input of the control device 200 is detected or when the user's motion is detected, the personal video list 910 may be displayed. However, example embodiments are not limited thereto.

The personal video list 910 may be displayed in a predetermined region of the display unit 120. For example, when the display unit 120 has a ratio of 21:9, a 16:9 image having a ratio of 16:9 is displayed on the display unit 120 and the personal video list 910 may be displayed in the remaining region. In addition, the image display apparatus 100 may display the personal video list 910 in a specific region only when a cursor is located in a preset specific region of the display unit 120. Accordingly, the user may move the cursor to the specific region to identify the personal video list 910 if necessary.

Referring to FIG. 13, a personal video may be classified by each user. For example, the image display apparatus 100 may identify the user corresponding to the personal video using an image of the user's face from which the change in facial expression is detected.

For example, if the image of the user's face from which the change in facial expression is detected when a first personal video is recorded and the image of the user's face from which the change in facial expression is detected when a second personal video is recorded are not the same, the image display apparatus 100 may determine that the first and second personal videos are personal videos of different users. In addition, if the image of the user's face from which the change in facial expression is detected when a third personal video is recorded and the image of the user's face from which the change in facial expression is detected when the first personal video is recorded are the same, it is possible to determine the first personal video and the third personal video as personal videos of the same user.

The stored personal video may be indicated by an icon 920. The icon 920 may include the image of the user's face captured at a point in time at which the change in facial expression of the user is detected. The icon 920 may include a thumbnail image indicating the recorded video.

As illustrated in FIG. 13, information about the video corresponding to the icon 920 may be displayed when the cursor is located on the icon 920. For example, the information may include a content name of the video, broadcast time information of the video, reproduction time information, information about the facial expression of the user detected when the video is recorded, etc.

In addition, when the user's input for selecting the icon 920 is detected, the image display apparatus 100 may reproduce a video corresponding to the selected icon. The display unit 120 may display the video to be reproduced and also display a time line 931 indicating a video reproduction time point.

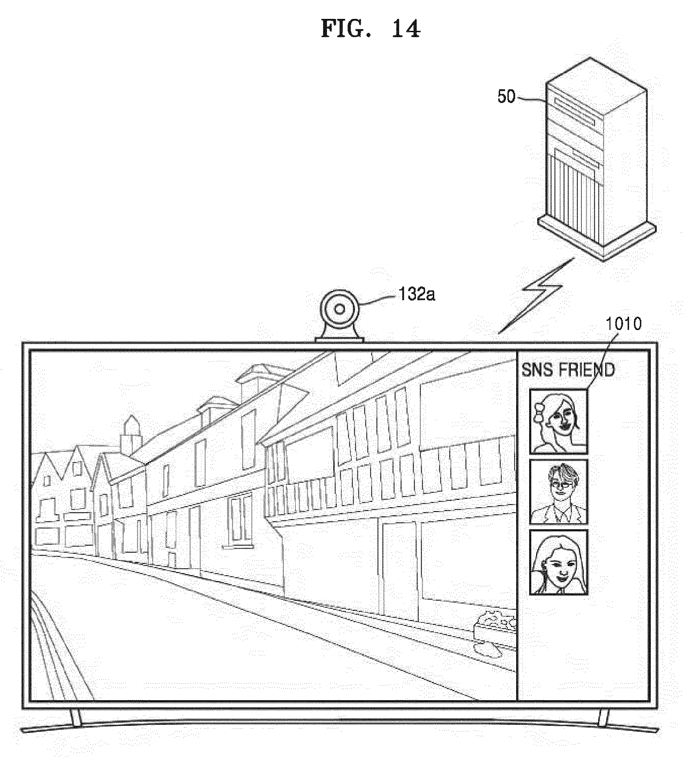

FIG. 14 is a diagram illustrating an example in which the image display apparatus shares a personal video through a server.

Referring to FIG. 14, the image display apparatus 100 according to an example embodiment may transmit the stored personal video to the server 50 and receive a personal video of an external user from the server 50.

The server 50 according to an example embodiment may, for example, be a social network service (SNS) server for providing an SNS. For convenience of description in FIG. 14, the server 50 will be described as the SNS server. However, example embodiments are not limited thereto.

The user of the image display apparatus 100 may join the SNS and have an SNS account. The SNS server 50 may receive and store personal videos stored by users joining the SNS.

The user of the image display apparatus 100 may transmit user information to the SNS server 50 to log in to the SNS server 50. The user information may include authentication information for logging in to the SNS server. Although not illustrated, the image display apparatus 100 may display a log-in page for receiving an input of the authentication information for logging in to the SNS server 50. The authentication information may include at least one of an identifier (ID), an e-mail address, and a password.

When the image display apparatus 100 and the SNS server 50 are connected through a network based on the logging in to the SNS server, the image display apparatus 100 may transmit (upload) the user's personal video to the SNS server 50. As illustrated in FIG. 14, the image display apparatus 100 may share a personal video uploaded to the server 50 by another user (for example, an SNS friend) linked to the social network. The image display apparatus 100 may display an icon 1010 corresponding to the personal video of the other user. At this time, when the input for selecting the icon 1010 is detected, the image display apparatus 100 may reproduce the video corresponding to the selected icon.

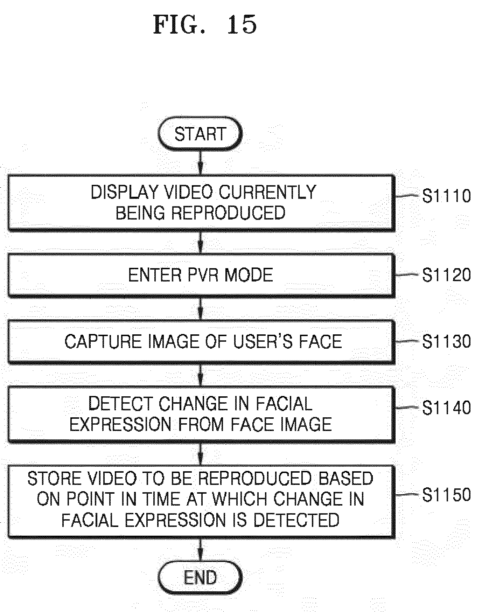

FIG. 15 is a flowchart illustrating an example method of operating the image display apparatus.

Referring to FIG. 15, the image display apparatus 100 according to an example embodiment may display a video currently being reproduced (S1110).

The video may, for example, include a video such as a movie, a drama, or a situation comedy, a broadcast program received from a broadcasting server, a music video, or the like.

The image display apparatus 100 according to an example embodiment may enter the PVR mode (S1120).

For example, as described with reference to FIG. 6, it is possible to enter the PVR mode using a menu screen or directly enter the PVR mode after detecting a specific key input provided in the control device 200. However, example embodiments are not limited thereto.

The image display apparatus 100 according to an example embodiment may capture the user's face (S1130).

For example, the image display apparatus 100 may capture an image of the user's face using a camera at the time of entering the PVR mode.

The image display apparatus 100 according to an example embodiment may detect a change in facial expression from the captured image of the user's face (S1140).

The image display apparatus 100 may, for example, compare an image of the user's expressionless face with the captured face image to detect the change in facial expression. The image of the user's expressionless face may be an image pre-stored by the user.

In addition, the image display apparatus 100 may compare the user's face image captured at the time of entering the PVR mode with the user's face image periodically captured after entering the PVR mode to detect the change in facial expression.

Because a method of comparing face images to detect a change in facial expression has been described with reference to FIG. 9, detailed description thereof will be omitted.

The image display apparatus 100 according to an example embodiment may store the video to be reproduced based on a point in time at which the change in facial expression is detected (S1150).

For example, the image display apparatus 100 may store the video (frames) to be reproduced in the storage unit from a first time point before a point in time at which the change in facial expression is detected to a second time point after the point in time at which the change in facial expression is detected. At this time, a time period from the first time point to the second time point may be preset by the user as described with reference to FIG. 6.

The image display apparatus 100 may sample and store some frames among frames included in the video to be reproduced from the first time point to the second time point.

The image display method according to an example embodiment may be implemented as program commands that may be performed through various computers, and may be recorded in a computer readable recording medium. The recording medium may include a program command, a data file, a data structure, and the like. Further, the program command may be specially designed and configured for the present invention, or may be well known to and used by those skilled in the related art of computer software. Further, the recording medium may include a magnetic medium such as a hard disk, a floppy disk, and a magnetic tape, an optical medium such as a compact disc-read only memory (CD-ROM) and a digital versatile disc (DVD), a magneto-optical medium such as a floptical disc, and a hardware device such as a ROM, a RAM, a flash memory, and the like. Furthermore, the program command may include not only a machine language code made by a compiler but also a high-level language code that may be executed by a computer using an interpreter. The hardware device may be configured to operate as one or more software modules for performance of the present invention.

It should be understood that example embodiments described herein should be considered in a descriptive sense only and not for purposes of limitation. Descriptions of features or aspects within each example embodiment should typically be considered as available for other similar features or aspects in other example embodiments.

While one or more example embodiments have been described with reference to the figures, it will be understood by those of ordinary skill in the art that various changes in form and details may be made therein without departing from the present invention as defined by the following claims.

## Claims

1. An image display apparatus comprising:
a camera configured to capture an image of a user's face;
a display configured to display a video currently being reproduced in the image display apparatus; and
a controller configured to detect a change in facial expression from the captured image of the user's face when entering a personal video recording (PVR) mode and when a change in facial expression is detected, to store in the storage unit the video to be reproduced from a first time point to a second time point, the first time point being a time point before a point in time at which the change in facial expression is detected to the second time point being a time point after the point in time at which the change in facial expression is detected.

2. The image display apparatus according to claim 1, further comprising:
detection circuitry configured to detect an input for selecting the PVR mode,
wherein the controller is configured to enter the PVR mode when the input for selecting the PVR mode is detected.

3. The image display apparatus according to claim 2, wherein the detection circuitry is configured to detect an input for setting a time period from the first time point to the second time point.

4. The image display apparatus according to claim 1, wherein the storage unit is configured to sequentially temporally store a predetermined number of frames to be reproduced from an entry time point of the PVR mode at the time of entering the PVR mode.

5. The image display apparatus according to claim 1, wherein the controller is configured to detect the change in facial expression by comparing a pre-stored first face image of the user with a second face image of the user captured by the camera.

6. The image display apparatus according to claim 1, wherein the controller is configured to detect the change in facial expression by comparing a first face image acquired by capturing the image of the user's face when entering the PVR mode with a second face image acquired by periodically capturing the image of the user's face after entering the PVR mode.

7. The image display apparatus according to claim 1, wherein the controller is configured to store audio corresponding to the stored video in the storage unit.

8. The image display apparatus according to claim 1, wherein the controller is configured to store some frames among frames included in the video to be reproduced from the first time point to the second time point in the storage unit.

9. A method of operating an image display apparatus, the method comprising:
displaying a video currently being reproduced in the image display apparatus;
entering a PVR mode;
capturing an image of a user's face;
detecting a change in facial expression from the captured image of the user's face; and
when the change in facial expression is detected, storing the video to be reproduced from a first time point to a second time point, the first time point being a time point before a point in time at which the change in facial expression is detected and the second time point being a time point after the point in time at which the change in facial expression is detected.

10. The method according to claim 9, wherein the entering includes:
detecting an input for selecting the PVR mode; and
entering the PVR mode when the input for selecting the PVR mode is detected.

11. The method according to claim 10, wherein the entering further includes detecting the input for setting a time period from the first time point to the second time point.

12. The method according to claim 9, further comprising:
sequentially temporally storing a predetermined number of frames to be reproduced from an entry time point of the PVR mode at the time of entering the PVR mode.

13. The method according to claim 9, wherein the detecting includes detecting the change in facial expression by comparing a pre-stored first face image with a second face image captured by a camera.

14. The method according to claim 9, wherein the detecting includes detecting the change in facial expression by comparing a first face image acquired by capturing the image of the user's face when entering the PVR mode with a second face image acquired by periodically capturing the image of the user's face after entering the PVR mode.

15. The method according to claim 9, further comprising:
storing audio corresponding to the stored video in a storage unit.

## Amended claims

### Amended claims in accordance with Rule 137(2) EPC.

1. An image display apparatus comprising:
a camera (132) configured to capture an image of a user's face;
a display (120) configured to display a video currently being reproduced in the image display apparatus; and
a controller (110) configured to detect a change in facial expression from the captured image of the user's face when entering a personal video recording (PVR) mode and when a change in facial expression is detected, to store in a storage unit (190) the video to be reproduced from a first time point to a second time point, the first time point being a time point before a point in time at which the change in facial expression is detected to the second time point being a time point after the point in time at which the change in facial expression is detected,
wherein the time period between the first time point and the second time point is preset.

2. The image display apparatus according to claim 1, further comprising:
detection circuitry configured to detect an input for selecting the PVR mode,
wherein the controller is configured to enter the PVR mode when the input for selecting the PVR mode is detected.

3. The image display apparatus according to claim 2, wherein the detection circuitry is configured to detect an input for setting a time period from the first time point to the second time point.

4. The image display apparatus according to claim 1, wherein the storage unit is configured to sequentially temporally store a predetermined number of frames to be reproduced from an entry time point of the PVR mode at the time of entering the PVR mode.

5. The image display apparatus according to claim 1, wherein the controller is configured to detect the change in facial expression by comparing a pre-stored first face image of the user with a second face image of the user captured by the camera.

6. The image display apparatus according to claim 1, wherein the controller is configured to detect the change in facial expression by comparing a first face image acquired by capturing the image of the user's face when entering the PVR mode with a second face image acquired by periodically capturing the image of the user's face after entering the PVR mode.

7. The image display apparatus according to claim 1, wherein the controller is configured to store audio corresponding to the stored video in the storage unit.

8. The image display apparatus according to claim 1, wherein the controller is configured to store some frames among frames included in the video to be reproduced from the first time point to the second time point in the storage unit.

9. A method of operating an image display apparatus, the method comprising:
displaying a video currently being reproduced in the image display apparatus;
entering a PVR mode;
capturing an image of a user's face;
detecting a change in facial expression from the captured image of the user's face; and
when the change in facial expression is detected, storing the video to be reproduced from a first time point to a second time point, the first time point being a time point before a point in time at which the change in facial expression is detected and the second time point being a time point after the point in time at which the change in facial expression is detected,
wherein the time period between the first time point and the second time point is preset.

10. The method according to claim 9, wherein the entering includes:
detecting an input for selecting the PVR mode; and
entering the PVR mode when the input for selecting the PVR mode is detected.

11. The method according to claim 10, wherein the entering further includes detecting the input for setting a time period from the first time point to the second time point.

12. The method according to claim 9, further comprising:
sequentially temporally storing a predetermined number of frames to be reproduced from an entry time point of the PVR mode at the time of entering the PVR mode.

13. The method according to claim 9, wherein the detecting includes detecting the change in facial expression by comparing a pre-stored first face image with a second face image captured by a camera.

14. The method according to claim 9, wherein the detecting includes detecting the change in facial expression by comparing a first face image acquired by capturing the image of the user's face when entering the PVR mode with a second face image acquired by periodically capturing the image of the user's face after entering the PVR mode.

15. The method according to claim 9, further comprising:
storing audio corresponding to the stored video in a storage unit.
